# EUROPEAN PATENT APPLICATION

(11) **EP 2 106 689 A1**
(43) Date of publication of application: **07.10.2009**
(21) Application number: 07858299.6
(22) Date of filing: 20.12.2007
(51) Int. Cl.: A01G 17/08, A01G 17/06

(54) **GUIDING AND SECURING ELEMENT FOR FORCING THE VERTICAL GROWTH OF VINES IN A VINEYARD**

(30) Priority: 23.01.2007 ES 200700136 U
(71) Applicant: Martin Alvarez, José Antonio, 26140 Lardero (ES)
(72) Inventor: MARTIN ALVAREZ, Angel Ricardo, E-26140 Lardero (ES)
(74) Representative: Pons Ariño, Angel
(86) International application number: PCT/ES2007/070215
(87) International publication number: WO 2008/090243

(57) **Abstract**

The invention relates to a guiding and securing element of the type used to group together and join the cables used to guide vines and to force said vines to grow vertically by confining same to the space between cables. The inventive element is formed by a twisted structure made from rigid wire having two branches, an elastic element being provided at the common vertex of said two branches. Moreover, each branch is bent at one or more points such as to form different segments and the free end of each branch is provided with a coupling element for connecting to the cable on the opposite side of a vine post

## Description

### OBJECT OF THE INVENTION

The present invention relates to a guide and fastening element to force the vertical growth of the stocks of a vine, which does not interfere in the automatic collection of grapes.

### BACKGROUND OF THE INVENTION

At present, there already exist on some vines devices whose purpose consists of guiding the branches of the stocks to force their vertical growth and thus avoid them branching off to the sides. These devices consist, in first place, of lines of posts aligned according to the direction of the furrows formed by the stocks and which go from one end of the vine to the other. On both sides of these posts and fastened to the two posts of the ends and to an intermediate one, wires run horizontally at several different heights. In second place, elements are fixed to each of the two sides of each post whose mission consists of keeping the aforementioned pairs of wires joined together, once joined, and thus avoid them from separating. In this way, when the stock branches reach increasing heights, these devices enclose them, forcing them to continue growing vertically, limited to the space between each pair of wires.

The spatial direction of the joints between the posts and the elements which keep the cables joined together has been, to date, perpendicular to the lines of posts and performed by fork nails. The drawback entailed by this joint is the ease with which the nail comes out, due to possible collisions with the automatic harvester. This machine circulates through the vine furrows, between the lines of posts and, therefore, may hit the nails and the protruding part of the element object of the invention, which are facing the sides of said machine. In addition to the drawback entailed by the nail coming out, as it leaves the guide device out of service, these detached nails occasionally reaching the hydraulic grape press may damage its membranes, causing a serious fault. These drawbacks are resolved with the object of the invention.

### DESCRIPTION OF THE INVENTION

In accordance with one aspect of the invention, a guide and fastening element is provided of the type which are used to approximate and keep joined together the cables which guide the stocks and which force their vertical growth, confining them to the space between said cables, **characterized in that** it is formed by a warped structure made with wire in a rigid material which has two branches in the common vertex whereof an elastic element is disposed, each branch being bent by one or more points forming different stretches and the free end of each branch having a hooking element, in order to hold the cable of the opposite side of a post of the vine.

In accordance with a preferred embodiment of the invention, the wire may be manufactured from any rigid material, in particular from any plastic, polymeric or metallic material.

In accordance with another preferred embodiment of the invention, the wire many be manufactured from stainless steel.

In the present document, it is understood that a structure is warped when it is not contained in one plane.

In order to improve clarity, branch is the name given to each of the parts of the structure found on both sides of the elastic element and which meet therein. In turn, a stretch is each one of the divisions of a branch, consisting of a segment of wire, bent in at least one of its ends.

Elastic element is also understood to be any element or device, for example, a torsion spring, which, when the branches meeting therein are separated or approximated, exercises a force in the opposite direction to the separation or approximation, called recovery force.

In accordance with another preferred embodiment of the invention, the elastic element is a torsion spring.

Furthermore, hooking element is also understood to mean any device that can be used to fasten the cable of the other end of the post, by way of hook or catch, among others.

In accordance with another preferred embodiment of the invention, the hooking element has the form of an arrow head.

The object of the invention provides an advantage based on the element's own morphology. The presence of a coiled torsion spring positioned in the centre of the element enables the materialization of a different type of joint with the posts. In first place, the spring orifice may house a screw, with which the joint will be made. In second place, said joint will have the same direction as the lines of posts, so that the screw is protected by them from colliding with the harvester, avoiding the elements object of the invention being separated from the posts. In this way, by positioning the elements at different heights on the posts, the shoots are guided in their growth in successive seasons.

### BRIEF DESCRIPTION OF THE DRAWINGS

Figure 1 shows an image taken in direction perpendicular to the lines of posts.
Figure 2 shows a practical embodiment of the object of the invention in open or winter position.
Figure 3 shows a practical embodiment of the object of the invention in closed or spring position.

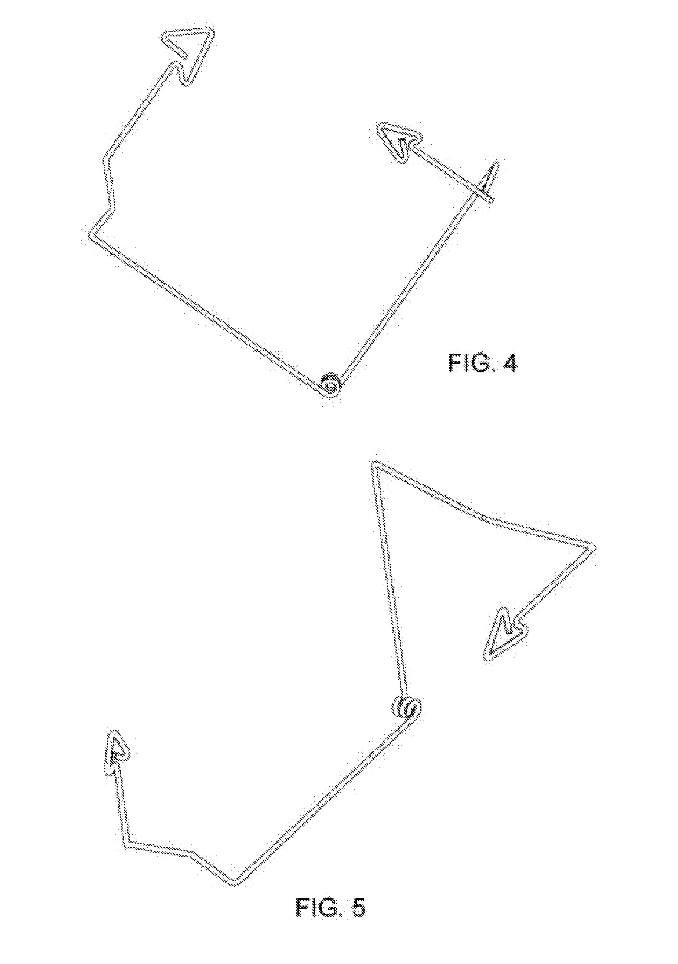

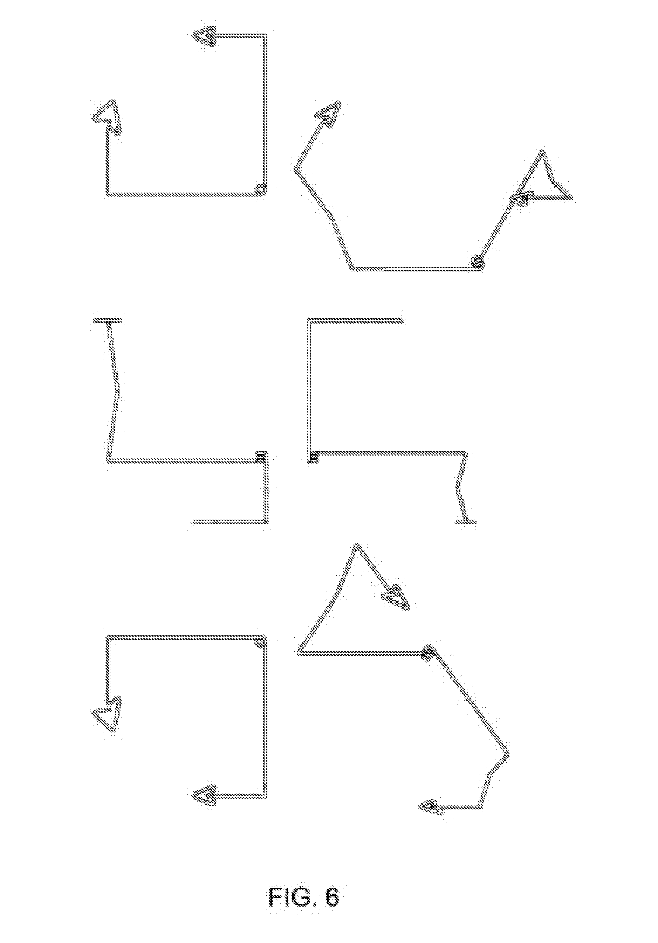

Figures 4, 5 and 6 show different types of practical embodiments of the object of the invention.

### DESCRIPTION OF A PRACTICAL EMBODIMENT OF THE INVENTION

The element 1 object of the invention is constituted by a wire in a rigid material formed by bending. The element marked as 2 is coiled forming a torsion spring. In the cavity formed by element 2 on being wound, a screw, rivet, bolt or such like is housed to fix it to the post. After the joint, stretches 4 and 5 form a vertical plane tangential to the post at the joining point. Stretches 6 and 7, slightly bent, are not contained in the plane defined by 4 and 5 and serve to hook the cable that remains on that side of the post. Stretches 8 and 9, which end in the hooking elements 10 and 11, serve to fasten the cable positioned on the opposite side of the post and attract it towards their side.

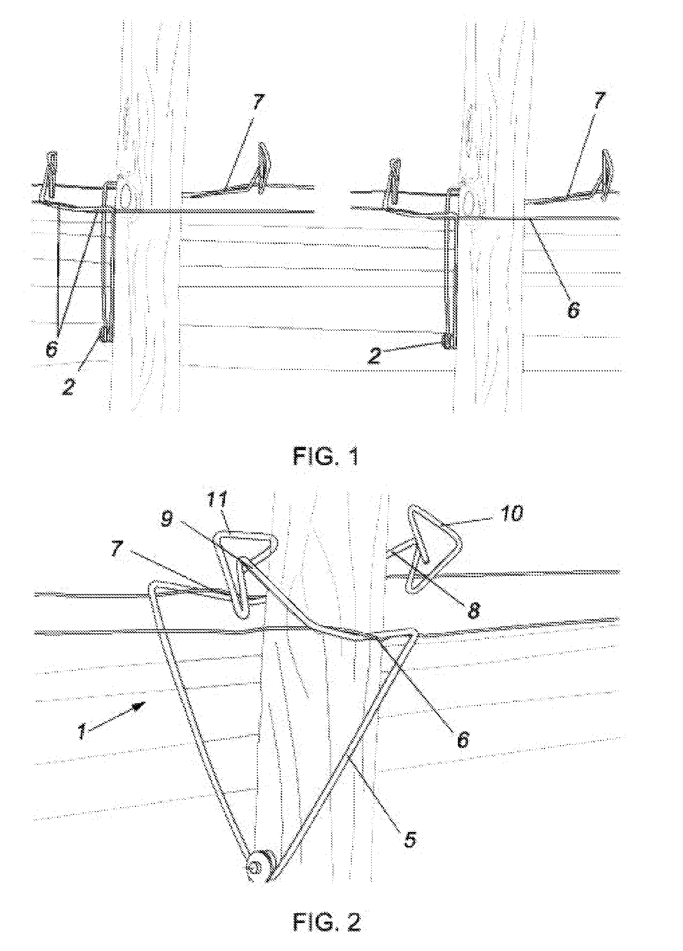

Figure 1 shows two adjacent posts of the same line and therein the placement of the element object of the invention is observed. The element object of the invention is protected by the post from collisions with the automatic harvester.

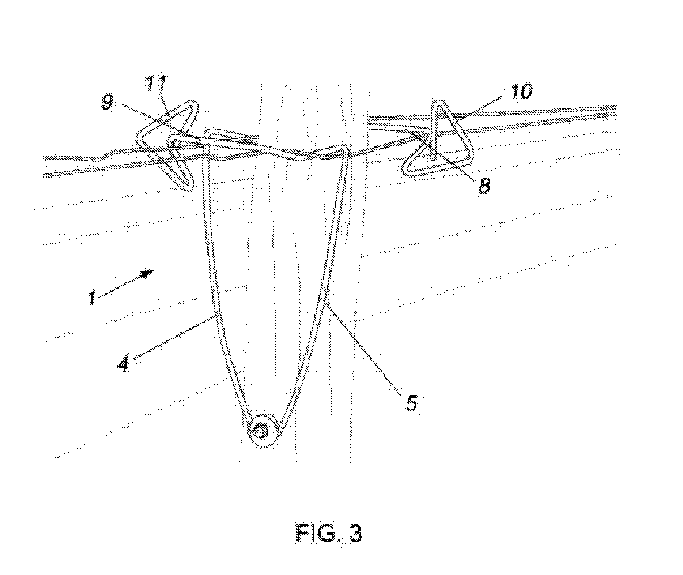

The object of the invention has two operating positions: Figure 2 shows the winter position, which is an open position, without work of the elastic element, wherein each cable of the post is only held by stretches 4 and 5. Figure 3 shows the spring position, which is a closed position, with the elastic element operating, wherein the hooking elements 10 and 11 are already fastening the cable of the opposite side. In this way, in the spring position the cables are closer together and enclose the shoots. Thus, the shoots grow inside the space limited by the cables and, on bringing them together, they are guided in their growth so that they grow vertically.

Having sufficiently described the nature of the invention, as well as its practical embodiment, it should be stated that the aforementioned devices and those represented in the drawings may have their details modified provided it does not alter the fundamental principle.

## Claims

1. A guide and fastening element of the type used to approximate and keep joined together the cables which guide the stocks and which force their vertical growth, confining them to the space between said cables, **characterized in that** it is formed by a warped structure made with wire in a rigid material which has two branches in the common vertex whereof an elastic element is disposed, each branch being bent by one or more points forming different stretches and the free end of each branch having a hooking element in order to hold the cable of the opposite side of a post of the vine.

2. Guide element according to claim 1, **characterized in that** it is manufactured by at least one material selected from any of those of the following list: metallic material, ceramic material or plastic material.

3. Guide element, according to claim 2, **characterized in that** it is manufactured in stainless steel.

4. Guide element according to any of the preceding claims, **characterized in that** the elastic element is a torsion spring.

5. Guide element according to any of the preceding claims **characterized in that** the hooking element has the form of an arrow head.
